# EUROPEAN PATENT APPLICATION

(11) **EP 4 700 853 A1**
(43) Date of publication of application: **25.02.2026**
(21) Application number: 23933473.3
(22) Date of filing: 20.04.2023
(51) Int. Cl.: H01M 4/136, H01M 4/36, H01M 4/62

(54) **POSITIVE ELECTRODE SHEET, SECONDARY BATTERY AND ELECTRIC DEVICE**

(71) Applicant: Contemporary Amperex Technology Co., Limited, Ningde, Fujian 352100 (CN)
(72) Inventor: SHI, Songjun, Ningde, Fujian 352100 (CN); CHEN, Xiangbin, Ningde, Fujian 352100 (CN); YU, Honggang, Ningde, Fujian 352100 (CN); LAI, Youlei, Ningde, Fujian 352100 (CN); LI, Jingru, Ningde, Fujian 352100 (CN); XING, Ke, Ningde, Fujian 352100 (CN); ZHAO, Zimeng, Ningde, Fujian 352100 (CN)
(74) Representative: Lorenz Seidler Gossel Part. mbB
(86) International application number: PCT/CN2023/089593
(87) International publication number: WO 2024/216597

(57) **Abstract**

Embodiments of the present application provide a positive electrode plate, a secondary battery and an electrical apparatus. The positive electrode plate includes a positive electrode current collector and a positive electrode film layer arranged on at least one side of the positive electrode current collector, where the positive electrode film layer includes a first film layer and a second film layer in a thickness direction of the positive electrode plate; the first film layer includes a lithium transition metal phosphate and a carbon coating applied on at least part of the surface of the lithium transition metal phosphate, and the second film layer includes a lithium transition metal oxide and a conductive agent; and a resistivity difference between the second film layer and the first film layer is 10-200 Ω·cm. The technical solutions of the present application may improve the cycling and rate performance of the battery.

## Description

### TECHNICAL FIELD

The present application relates to the technical field of lithium-ion secondary batteries, and in particular to a positive electrode plate, a secondary battery and an electrical apparatus.

### BACKGROUND

In recent years, lithium batteries have been increasingly used in a wide range of applications, such as wind power, water power, thermal power generation, and solar power stations for energy storage, as well as electric bicycles, electric motorcycles, electric vehicles, military equipment, aerospace, and many other fields. Due to the great development of lithium batteries, higher requirements have also been placed on the lithium batteries in terms of cycling performance, rate performance, etc.

Therefore, how to improve the cycling performance and rate performance of the lithium batteries is an urgent problem to be solved.

### SUMMARY OF THE INVENTION

The present application is conducted in view of the above issues, and aims to provide a positive electrode plate, a secondary battery and an electrical apparatus, where both the cycling performance and rate performance of the battery can be improved.

A first aspect of the present application provides a positive electrode plate, which includes a positive electrode current collector and a positive electrode film layer arranged on at least one side of the positive electrode current collector, where the positive electrode film layer includes a first film layer and a second film layer in a thickness direction of the positive electrode plate; the first film layer includes a lithium transition metal phosphate and a carbon coating applied on at least part of the surface of the lithium transition metal phosphate, and the second film layer includes a lithium transition metal oxide and a conductive agent; and a resistivity difference between the second film layer and the first film layer is 10-200 Ω·cm.

In the embodiment of the present application, the positive electrode plate includes the positive electrode current collector and the positive electrode film layer; further, the positive electrode film layer includes the first film layer containing the lithium transition metal phosphate and the carbon coating, and the second film layer containing the lithium transition metal oxide and the conductive agent. Here, the resistivity of the second film layer is greater than that of the first film layer, specifically, the resistivity difference between the second film layer and the first film layer is 10-200 Ω·cm. The conductive agent added to the second film layer with a large resistivity value may reduce the overall resistivity of the second film layer and improve conductivity of the second film layer, may reduce internal resistance of the battery and reduce the lithium ion deintercalation imbalance caused by the excessive resistivity difference between the first film layer and the second film layer, thereby improving the cycling performance and rate performance of the battery.

In a possible embodiment, a resistivity difference between the second film layer and the first film layer is 30-150 Ω·cm.

In the embodiment of the present application, the resistivity difference between the second film layer including the lithium transition metal oxide and the conductive agent and the first film layer including the lithium transition metal phosphate and the carbon coating is 10-200 Ω·cm, and further, 30-150 Ω·cm. Since the resistivity difference between the second film layer and the first film layer is limited to 30-150 Ω·cm, the lithium ion deintercalation imbalance caused by the excessive resistivity difference between the first film layer and the second film layer can be further reduced, thereby improving the cycling performance and rate performance of the battery.

In a possible embodiment, the first film layer has a resistivity of 20-50 Ω·cm, and optionally, the first film layer has a resistivity of 20-40 Ω·cm; and/or the second film layer has a resistivity of 100-250 Ω·cm, and optionally, the second film layer has a resistivity of 100-200 Ω·cm.

In the embodiment of the present application, since the resistivity of the first film layer and the second film layer is limited to20-50 Ω·cm and 100-250 Ω·cm, especially 20-40 Ω·cm and 100-200 Ω·cm, respectively, the conductivity of the first film layer and the second film layer can be improved.

In a possible embodiment, based on 100 parts by weight of the second film layer, the content of the conductive agent is 0.1-5 parts by weight, and optionally, the content of the conductive agent is 0.5-3 parts by weight.

In the embodiment of the present application, in order to improve the conductivity of the second film layer to reduce the lithium ion deintercalation imbalance caused by the excessive difference in the conductivity of different film layers, a conductive agent is added to the second film layer. However, if too much conductive agent is added, it will affect other performance of the battery, such as energy density. Since the mass fraction of the conductive agent added to the second film layer in the second film layer is 0.1%-5%, especially 0.5%-3%, the conductivity of the second film layer and other performance of the battery can be balanced.

In a possible embodiment, the conductive agent includes a chain conductive agent and/or a net-like conductive agent, optionally, the chain conductive agent includes carbon nanotubes and/or carbon nanofibers, and the net-like conductive agent comprises graphene.

In the embodiment of the present application, the conductive agent may be the chain conductive agent or net-like conductive agent. Specifically, the conductive agent may be conductive carbon, carbon nanotubes and graphene. Conductive carbon, carbon nanotubes and graphene are all widely used materials with good conductive properties. At least one of conductive carbon, carbon nanotubes and graphene is added to the second film layer with poor conductivity, which can improve the conductivity of the second film layer, thereby improving the cycling performance and specific capacity of the battery. The conductive carbon, carbon nanotubes and graphene are easy to obtain, which is conducive to large-scale application in production.

In a possible embodiment, the carbon nanotubes have a length-to-diameter ratio of 4-100, and optionally, the carbon nanotubes have a length-to-diameter ratio of 10-50.

In the embodiment of the present application, the larger the length-to-diameter ratio of the carbon nanotubes is, the better the conductivity thereof is. Therefore, since the length-to-diameter ratio of carbon nanotubes is limited to 4-100, especially 10-50, the carbon nanotubes have a good conductivity without serious agglomeration, thereby reducing the processing difficulty.

In a possible embodiment, in the first film layer, the carbon coating has a coating thickness of 3-30 µm; and optionally, the carbon coating has a coating thickness of 5-20 µm; and/or based on 100 parts by weight of the first film layer, the content of the carbon coating is 0.2-5 parts by weight, and optionally, the content of the carbon coating is 0.5-2 parts by weight.

In the embodiment of the present application, the first film layer includes the first positive electrode active material and the carbon coating applied on the surface of the first positive electrode active material. The carbon coating is applied on the surface of the positive electrode active material to improve the conductivity of the entire first film layer. However, the carbon coating has a low density, which will affect the compacted density of the first film layer, thereby affecting the specific capacity and energy density of the entire battery. Therefore, since the coating thickness of the carbon coating is limited to 3-30 nm, especially 5-20 nm, or the mass proportion of the carbon coating in the first film layer is limited to 0.2%-5%, especially 0.5%-2%, the first film layer may maintain a good conductivity without affecting the specific capacity and energy density of the battery.

In a possible embodiment, a mass ratio of the first film layer to the second film layer is 0.125-10, optionally, the mass ratio of the first film layer to the second film layer is 0.5-5; and/or, the first film layer has a mass per unit area of 3.5-35 mg/cm², optionally, the first film layer has a mass per unit area of 10-25 mg/cm²; and the second film layer has a mass per unit area of 3.5-30 mg/cm², optionally, the second film layer has a mass per unit area of 5-25 mg/cm².

In the embodiment of the present application, since the mass ratio of the first film layer to the second film layer is limited to 0.125-10, especially 0.5-5, it can be ensured that the mass ratio of the first film layer to the second film layer is within a suitable range, ensuring that the battery has better performance.

In the embodiment of the present application, the mass per unit area of the first film layer is maintained at 3.5-35 mg/cm², especially 10-25 mg/cm², which can ensure a higher energy density of the battery.

In the embodiment of the present application, the mass per unit area of the second film layer is maintained at 3.5-30 mg/cm², especially 5-25 mg/cm², which can ensure a higher energy density of the battery.

In a possible embodiment, a thickness ratio of the first film layer to the second film layer is 0.12-20, optionally, the thickness ratio of the first film layer to the second film layer is 2-10; and/or, the first film layer has a thickness of 12-180 µm, optionally, the first film layer has a thickness of 30-140 µm; and/or, the second film layer has a thickness of 9-180 µm, optionally, the second film layer has a thickness of 20-100 µm.

In the embodiment of the present application, the thickness ratio of the first film layer to the second film layer is limited to 0.12-20, especially 2-10, which may bring a good conductivity to the positive electrode plate.

In the embodiment of the present application, since the thickness of the first film layer is set to be 12-180 µm, especially 30-140 µm, the probability of difficulty in electrolyte infiltration due to the excessive thickness of the first film layer can be reduced while the energy density of the battery can be ensured.

In the embodiment of the present application, since the thickness of the second film layer is set to be 9-180 µm, especially 20-100 µm, the probability of difficulty in electrolyte infiltration due to the excessive thickness of the second film layer can be reduced while the energy density of the battery can be ensured.

In a possible embodiment, the positive electrode plate has a resistivity of 10-100 Ω·cm, optionally, the positive electrode plate has a resistivity of 15-35 Ω·cm; and/or the first film layer has a compacted density of 1.5-3.0 g/cm³, optionally, the first film layer has a compacted density of 1.8-2.8 g/cm³; and/or the second film layer has a compacted density of 2.5-4.0 g/cm³, optionally, the second film layer has a compacted density of 2.5-3.6 g/cm³.

In the embodiment of the present application, since the resistivity of the positive electrode plate is limited to10-100 Ω·cm, especially 15-35 Ω·cm, it can be ensured that the positive electrode plate has a good conductivity, so that the battery has a good conductivity.

In the embodiment of the present application, the compacted density of the first film layer is set to be 1.5-3.0 g/cm³, especially 1.8-2.8 g/cm³, which can not only ensure the energy density of the battery but also improve the cycling performance of the battery.

In the embodiment of the present application, the compacted density of the second film layer is set to be 2.5-4.0 g/cm³, especially 2.5-3.6 g/cm³, which can not only ensure the energy density of the battery but also improve the cycling performance of the battery.

In a possible embodiment, the first film layer is farther away from the positive electrode current collector than the second film layer.

In the embodiment of the present application, the first film layer is farther away from the positive electrode current collector than the second film layer, that is, the second film layer is arranged between the positive electrode current collector and the first film layer. The first film layer is arranged on the second film layer, which is conducive to improving the cycling performance of the battery.

In a possible embodiment, the lithium transition metal phosphate includes Li₁₊ₓ₁Feₓ₂Mnₓ₃M1ₓ₄P₁₋ₓ₅O₄₋ₓ₆, where -0.8 ≤ x1 ≤ 0.2, 0 ≤ x2 ≤ 1, 0 ≤ x3 ≤ 1, 0 ≤ x4 ≤ 0.1, 0 ≤ x5 ≤ 0.1, 0 ≤ x6 ≤ 0.4, and M1 includes at least one of Mn, Al, Cu, Mg, Zn, Ni, Ti, V, Zr, Co, Ga, Sn, Sb, Nb, and Ge.

Ina possible embodiment, the lithium transition metal oxide includes Li_{1+y1}Ni_{y2}Co_{y3}Mn_{y4}M2_{y5}O_{2-y6}, where -0.8≤ y1 ≤ 0.2,0.5 ≤ y2 ≤ 1, 0 ≤ y3 ≤ 0.5, 0 ≤ y4 ≤ 1, 0 ≤ y5 ≤ 1, 0 ≤ y6 ≤ 0.4, and M2 includes at least one of Fe, Al, Cu, Mg, Zn, Ti, V, Zr, Ga, Sn, Sb, Nb, Ge, Zr, B, and W.

A second aspect of the present application provides a battery, including the positive electrode plate according to any embodiment of the first aspect of the present application.

A third aspect of the present application provides an electrical apparatus, including the secondary battery according to the second aspect of the present application.

### DESCRIPTION OF DRAWINGS

In order to illustrate the technical solutions of the Examples of the present application more clearly, the drawings required in the Examples of the present application will be briefly introduced below. Obviously, the drawings described below are only some Examples of the present application. For those of ordinary skill in the art, other drawings may also be obtained according to the drawings without any creative effort.
FIG. 1 is a schematic structural diagram of a positive electrode plate according to an embodiment of the present application;
FIG. 2 is a schematic diagram of a secondary battery according to an embodiment of the present application;
FIG. 3 is a schematic structural diagram of a secondary battery according to an embodiment of the present application;
FIG. 4 is a schematic diagram of a battery pack according to an embodiment of the present application;
FIG. 5 is a schematic structural diagram of a battery pack according to an embodiment of the present application;
FIG. 6 is a schematic structural diagram of a vehicle according to an embodiment of the present application.

### DETAILED DESCRIPTION

Hereinafter, embodiments of a positive electrode plate, a secondary battery, and an electrical apparatus of the present application are described in detail with reference to the drawings as appropriate, but unnecessary details have been omitted. For example, there are cases where detailed descriptions of well-known items and repeated descriptions of actually identical structures are omitted. In addition, the drawings and subsequent descriptions are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. A range defined in this manner may be inclusive or exclusive of the end values, and may be arbitrarily combined, that is, any lower limit may be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b and including a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all steps of the present application may be performed sequentially or randomly, and optionally sequentially. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, for example, the method may include steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

The terms "above", "below", "more", or "less" used in the present application include the number itself. For example, "at least one" means one or more, and "at least one of A and B" means "A", "B" or "A and B".

Unless otherwise particularly stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Lithium batteries are widely used in consumer electronics due to their advantages such as high energy density and high power. In recent years, with the continuous development of electric vehicles and energy storage systems, people's requirements for various aspects of lithium battery performance are also constantly increasing.

In order to improve the conductivity of lithium battery positive electrode materials, the more commonly used technical means is to coat surfaces of the positive electrode materials with a carbon coating. However, in a positive electrode plate composed of various active materials, if conductivity of one of the active materials is improved by coating its surface with carbon, then the conductivity of that active material will differ significantly from that of the other active materials. This will lead to the deintercalation imbalance of lithium ions in the battery, and causing problems such as lithium pressure imbalance and even lithium plating, which will affect the cycling performance and rate performance of the battery. Therefore, how to balance the conductivity of different regions of the positive electrode plate composed of various active materials to improve the cycling performance and rate performance of the battery is an urgent problem to be solved.

In view of this, the present application provides a positive electrode plate which includes a positive electrode current collector and a positive electrode film layer. The positive electrode film layer includes a first film layer and a second film layer in a thickness. A conductive agent is added to the second film layer containing a second positive electrode active material that is not coated with a carbon coating, which can reduce the overall resistivity of the second film layer and improve conductivity of the second film layer, reduce internal resistance of the battery and reduce the lithium ion deintercalation imbalance caused by the excessive resistivity difference between the first film layer and the second film layer, thereby improving the cycling performance and rate performance of the battery.

The positive electrode plate, the secondary battery and the electrical apparatus of the present application are described below with reference to the accompanying drawings.

In addition, the technical solutions of the present application are applicable to various types of batteries such as lithium-ion batteries, lithium metal batteries, sodium-ion batteries, and sodium metal batteries, and the present application does not impose limitations thereto. For the sake of convenience, lithium-ion batteries are used as an example for the following description.

### [Positive electrode plate]

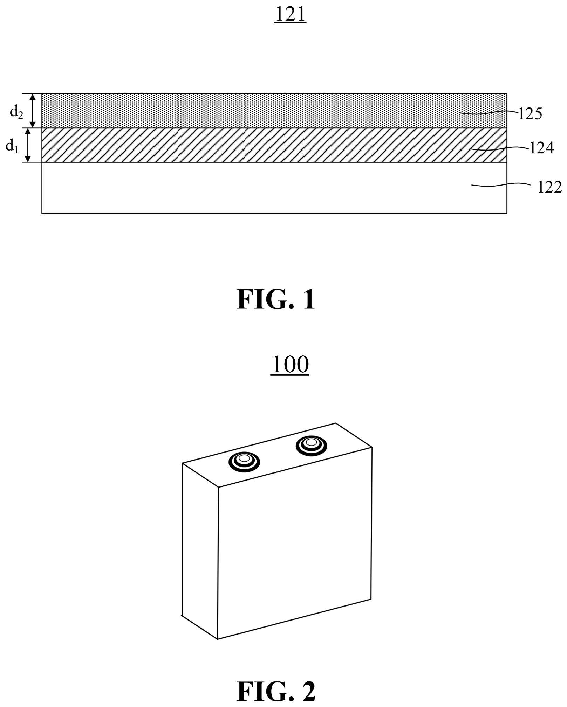

A first aspect of the present application provides a positive electrode plate. FIG. 1 is a schematic structural diagram of a positive electrode plate according to an embodiment of the present application. The positive electrode plate 121 includes a positive electrode current collector 122 and a positive electrode film layer arranged on at least one surface of the positive electrode current collector 122.

The positive electrode film layer includes a first film layer 124 and a second film layer 125 in a thickness direction of the positive electrode plate 121.

The first film layer 124 includes a lithium transition metal phosphate and a carbon coating applied on at least part of the surface of the lithium transition metal phosphate, and the second film layer 125 includes a lithium transition metal oxide and a conductive agent; and a resistivity difference between the second film layer 125 and the first film layer 124 is 10-200 Ω·cm.

The conductive agent added to the second film layer 125 with a high resistivity may improve the conductivity of the second film layer 125 containing the second positive electrode active material, reduce the lithium ion deintercalation imbalance caused by the excessive resistivity difference between the first film layer 124 and the second film layer 125, thereby improving the cycling performance and rate performance of the battery.

In general, a secondary battery 100 includes the positive electrode plate 121, a separator, a negative electrode plate and an electrolyte. During charging and discharging of the battery, active ions are intercalated and deintercalated back and forth between positive and negative electrodes. The electrolyte conduct ions between the positive and negative electrodes, and the separator is arranged between the positive and negative electrodes to prevent short circuits between the positive and negative electrodes while allowing ions to pass through.

It should be noted here that the "positive electrode plate" and "negative electrode plate" mentioned in the embodiments of the present application refer to the positive electrode plate and the negative electrode plate respectively as a whole including active materials, current collectors or other additives.

The positive electrode plate includes the positive electrode current collector 122 and the positive electrode film layer arranged on at least one surface of the positive electrode current collector 122, where the positive electrode film layer includes a positive electrode active material, i.e., the lithium transition metal phosphate and lithium transition metal oxide mentioned above.

As an example, the positive electrode current collector 122 has two opposite surfaces in its own thickness direction, and the positive electrode film layer is arranged on either or both of two opposite surfaces of the positive electrode current collector 122.

In the above solution, the positive electrode plate 121 includes the positive electrode current collector 122 and the positive electrode film layer; further, the positive electrode film layer includes the first film layer 124 containing the lithium transition metal phosphate and the carbon coating, and the second film layer 125 containing the lithium transition metal oxide and the conductive agent. The resistivity of the second film layer 125 is greater than that of the first film layer 124, specifically, the resistivity difference between the second film layer and the first film layer is 10-200 Ω·cm. The conductive agent added to the second film layer 125 with a large resistivity value may reduce the overall resistivity of the second film layer 125 and improve conductivity of the second film layer 125, may reduce internal resistance of the battery and reduce the lithium ion deintercalation imbalance caused by the excessive resistivity difference between the first film layer 124 and the second film layer 125, thereby improving the cycling performance and rate performance of the battery.

It should be noted that the resistivity difference between the second film layer 125 and the first film layer 124 is 10-200 Ω·cm, that is, the resistivity of the second film layer 125 is 10-200 Ω·cm greater than the overall resistivity of the first film layer 124. The difference may be 30 Ω·cm, 50 Ω·cm, 100 Ω·cm or 180 Ω·cm, and within a range consisting of the above values.

In some embodiments, the resistivity difference between the second film layer 125 and the first film layer 124 is 30-150Ω·cm.

In the above solution, the resistivity difference between the second film layer 125 including the lithium transition metal oxide and the conductive agent and the first film layer 124 including the lithium transition metal phosphate and the carbon coating is 10-200 Ω·cm, and further, 30-150 Ω·cm. Since the resistivity difference between the second film layer 125 and the first film layer 124 is limited to 30-150 Ω·cm, the lithium ion deintercalation imbalance caused by the excessive resistivity difference between the first film layer 124 and the second film layer 125 can be further reduced, thereby improving the cycling performance and rate performance of the battery.

It should be noted that, the resistivity difference between the second film layer 125 and the first film layer 124 may be 80 Ω·cm, 100 Ω·cm or 120 Ω·cm, and within a range consisting of the above values.

In some embodiments, the first film layer 124 has a resistivity of 20-50 Ω·cm, and optionally, the first film layer 124 has a resistivity of 20-40 Ω·cm; and/or the second film layer 125 has a resistivity of 100-250 Ω·cm, and optionally, the second film layer 125 has a resistivity of 100-200 Ω·cm.

In the above solution, since the resistivity of the first film layer 124 and the second film layer 125 is limited to20-50 Ω·cm and 100-250 Ω·cm, especially 20-40 Ω·cm and 100-200 Ω·cm, respectively, the conductivity of the first film layer 124 and the second film layer 125 can be improved.

It should be noted that the resistivity of the first film layer 124 may be 20 Ω·cm, 30 Ω·cm, or 45 Ω·cm, and within a range consisting of the above values; the resistivity of the second film layer 125 may be 120 Ω·cm, 150 Ω·cm, or 200 Ω·cm, and within a range consisting of the above values.

In some embodiments, based on 100 parts by weight of the second film layer 125, the content of the conductive agent is 0.1-5 parts by weight, and optionally, the content of the conductive agent is 0.5-3 parts by weight.

In the above solution, in order to improve the conductivity of the second film layer 125 to reduce the lithium ion deintercalation imbalance caused by the excessive difference in the conductivity of different film layers, a conductive agent is added to the second film layer 125. However, if too much conductive agent is added, it will affect other performance of the battery, such as energy density. Since the mass fraction of the conductive agent added to the second film layer 125 is 0.1%-5%, especially 0.5%-3% in the second film layer 125, the conductivity of the second film layer and other performance of the battery can be balanced.

It should be noted that the content of the conductive agent may be 0.5 parts by weight, 1 part by weight, 3 parts by weight, and within a range consisting of the above values.

In some embodiments, the conductive agent includes a chain conductive agent and/or a net-like conductive agent, optionally, the chain conductive agent includes carbon nanotubes and/or carbon nanofibers, and the net-like conductive agent includes graphene.

The chain conductive agent refers to a conductive agent having a one-dimensional linear structure, including but not limited to carbon nanotubes, carbon nanofibers, etc.; the net-like conductive agent refers to a conductive agent having a net-like structure, including but not limited to graphene, etc.

In the above solution, the conductive agent may be the chain conductive agent or net-like conductive agent. Specifically, the conductive agent may be conductive carbon, carbon nanotubes and graphene. Conductive carbon, carbon nanotubes and graphene are all widely used materials with good conductive properties. At least one of conductive carbon, carbon nanotubes and graphene is added to the second film layer 125 with poor conductivity, which can improve the conductivity of the second film layer 125, thereby improving the cycling performance and specific capacity of the battery. The conductive carbon, carbon nanotubes and graphene are easy to obtain, which is conducive to large-scale application in production.

In some embodiments, the carbon nanotubes have a length-to-diameter ratio of 4-100, and optionally, the carbon nanotubes have a length-to-diameter ratio of 10-50.

In the above solution, the larger the length-to-diameter ratio of the carbon nanotubes is, the better the conductivity thereof is. Therefore, since the length-to-diameter ratio of carbon nanotubes is limited to 4-100, especially 10-50, the carbon nanotubes have a good conductivity without serious agglomeration, thereby reducing the processing difficulty.

It should be noted here that the length-to-diameter ratio of the carbon nanotubes is the ratio of a first longest length passing through the interior of the carbon nanotube particles to a second longest diameter perpendicular to the first longest length.

It should be noted here that the length-to-diameter ratio of the carbon nanotubes may be 10, 20 or 50, and within a range consisting of the above values.

In some embodiments, in the first film layer 124, the carbon coating has a coating thickness of 3-30 µm; and optionally, the carbon coating has a coating thickness of 5-20 µm; and/or based on 100 parts by weight of the first film layer 124, the content of the carbon coating is 0.2-5 parts by weight, and optionally, the content of the carbon coating is 0.5-2 parts by weight.

In the above solution, the first film layer includes a first lithium transition metal phosphate and a carbon coating applied on the surface of the lithium transition metal phosphate. The carbon coating is applied on at least part of the surface of the lithium transition metal phosphate to improve the conductivity of the entire first film layer 124 . However, the carbon coating 1242 has a low density, which will affect the compacted density of the first film layer 124, thereby affecting the specific capacity and energy density of the entire battery. Therefore, since the coating thickness of the carbon coating is limited to 3-30 nm, especially 5-20 nm, or the mass proportion of the carbon coating in the first film layer 124 is limited to 0.2%-5%, especially 0.5%-2%, the first film layer 124 may maintain a good conductivity without affecting the specific capacity and energy density of the battery.

The coating thickness of the carbon coating is the thickness of the carbon coating applied on the surface of the lithium transition metal phosphate.

It should be noted here that the coating thickness of the carbon coating may be 10 nm, 20 nm or 25 nm, and within a range consisting of the above values.

In some embodiments, a mass ratio of the first film layer 124 to the second film layer 125 is 0.125-10, optionally, the mass ratio of the first film layer 124 to the second film layer 125 is 0.5-5; and/or, the first film layer 124 has a mass per unit area of 3.5-35 mg/cm², optionally, the first film layer 124 has a mass per unit area of 10-25 mg/cm²; and the second film layer 125 has a mass per unit area of 3.5-30 mg/cm², optionally, the second film layer 125 has a mass per unit area of 5-25 mg/cm².

In the above solution, since the mass ratio of the first film layer 124 to the second film layer 125 is limited to 0.125-10, especially 0.5-5, it can be ensured that the mass ratio of the first film layer 124 to the second film layer 125 is within a suitable range, ensuring that the battery has better performance.

In the embodiment of the present application, the mass per unit area of the first film layer 124 is obtained by dividing the total weight m1 of the lithium transition metal phosphate and the carbon coating by the area V of the positive electrode current collector; the mass per unit area of the second film layer 125 is obtained by dividing the total weight m2 of the lithium transition metal oxide and the conductive agent by the area V of the positive electrode current collector; the mass ratio of the first film layer 124 and the second film layer 125 is equal to (m1/V)/(m2/V).

It should be noted here that the mass ratio of the first film layer 124 to the second film layer 125 may be 0.5, 2 or 5, and within a range consisting of the above values.

In the above solution, the mass per unit area of the first film layer 124 is maintained at 3.5-35 mg/cm², especially 10-25 mg/cm², which can ensure a higher energy density of the battery.

It should be noted that the mass per unit area of the first film layer 124 may be 5 mg/cm², 8 mg/cm²or 15 mg/cm², and within a range consisting of the above values.

In the above solution, the mass per unit area of the second film layer 125 is maintained at 3.5-30 mg/cm², especially 5-25 mg/cm², which can ensure a higher energy density of the battery.

It should be noted that the mass per unit area of the second film layer 125 may be 5 mg/cm², 15 mg/cm²or 28 mg/cm², and within a range consisting of the above values.

In some embodiments, a thickness ratio of the first film layer 124 to the second film layer 125 is 0.12-20, optionally, the thickness ratio of the first film layer 124 to the second film layer 125 is 2-10; and/or, the first film layer 124 has a thickness d₁ of 12-180µm, optionally, the first film layer 124 has a thickness d₁ of 30-140 µm; and/or, the second film layer 125 has a thickness d₂ of 9-180 µm, optionally, the second film layer 125 has a thickness d₂ of 20-100 µm.

The thickness d₁ of the first film layer 124 here is the total coating thickness d₁ of the coated lithium transition metal phosphate and carbon coating; the thickness d₂ of the second film layer 125 is the total coating thickness d₂ of the coated lithium transition metal oxide and conductive agent; the thickness ratio of the first film layer 124 to the second film layer 125 is d₁/d₂.

In the above solution, the thickness ratio of the first film layer 124 to the second film layer 125 is limited to 0.12-20, especially 2-10, which can bring good conductivity to the positive electrode plate.

It should be noted here that the thickness ratio of the first film layer 124 to the second film layer 125 may be 0.5, 5 or 15,and within a range consisting of the above values.

In the above solution, since the thickness of the first film layer 124 is set to be 12-180 µm, especially 30-140 µm, the probability of difficulty in electrolyte infiltration due to excessive thickness of the first film layer 124 can be reduced while the energy density of the battery can be ensured.

It should be noted that the thickness of the first film layer 124 may be 20 µm, 50 µm, or 150 µm, and within a range consisting of the above values.

In the above solution, since the thickness of the second film layer 125 is set to be 9-180 µm, especially 20-100 µm, the probability of difficulty in electrolyte infiltration due to excessive thickness of the second film layer 125 can be reduced while the energy density of the battery can be ensured.

It should be noted that the thickness of the second film layer 125 may be 20 µm, 50 µm, or 100 µm, and within a range consisting of the above values.

In some embodiments, the positive electrode plate 121 has a resistivity of 10-100 Ω·cm, optionally, the positive electrode plate 121 has a resistivity of 15-35 Ω·cm; and/or the first film layer 124 has a compacted density of 1.5-3.0 g/cm³, optionally, the first film layer 124 has a compacted density of 1.8-2.8 g/cm³; and/or the second film layer 125 has a compacted density of 2.5-4.0 g/cm³, optionally, the second film layer 125 has a compacted density of 2.5-3.6 g/cm³.

The compacted density of the first film layer 124 isa ratio of the mass per unit area to the thickness, which is m₁/d₁. The compacted density of the second film layer 125 is m₂/d₂.

In the above solution, since the resistivity of the positive electrode plate 121 is limited to10-100 Ω·cm, especially 15-35 Ω·cm, it can be ensured that the positive electrode plate 121 has good conductivity, so that the battery has good conductivity.

It should be noted that, the resistivity of the positive electrode plate 121 may be 15 Ω·cm, 40 Ω·cm, or 80 Ω·cm, and within a range consisting of the above values.

In the above solution, the compacted density of the first film layer 124 is 1.5-3.0 g/cm³, especially 1.8-2.8 g/cm³, which can not only ensure the energy density of the battery but also improve the cycling performance of the battery.

Unless otherwise specified, the compacted density refers to the compacted density of the material under a pressure of 400 kN.

It should be noted that the compacted density of the first film layer 124 may be 2 g/cm³, 2.2 g/cm³or 2.5 g/cm³,as long as the value is within the above range, and the present application does not limit the specific value.

In the above solution, the compacted density of the second film layer 125 is 2.5-4.0 g/cm³, especially 2.5-3.6 g/cm³ and within a range consisting of the above values.

It should be noted that the compacted density of the second film layer 125 may be 3 g/cm³, 3.5 g/cm³, or 4 g/cm³, and within a range consisting of the above values.

In some embodiments, the second film layer 125 is farther away from the positive electrode current collector 122 than the first film layer 124 .

In the above solution, the second film layer 125 is farther away from the positive electrode current collector 122 than the first film layer 124, that is, the first film layer 124 is arranged between the positive electrode current collector 122 and the first film layer 125. The second film layer 125 is arranged on the first film layer 124, which is conducive to improving the power of the battery.

In some embodiments, the first film layer 124 is farther away from the positive electrode current collector 122 than the second film layer 125.

In the above solution, the first film layer 124 is farther away from the positive electrode current collector 122 than the second film layer 125, that is, the second film layer 125 is arranged between the positive electrode current collector 122 and the first film layer 124. The first film layer 124 is arranged on the second film layer 125, which is conducive to improving the cycling performance of the battery.

In some embodiments, the lithium transition metal phosphate includes Li₁₊ₓ₁Feₓ₂Mnₓ₃M1ₓ₄P₁₋ₓ₅O₄₋ₓ₆, where -0.8 ≤ x1 ≤ 0.2, 0 ≤ x2 ≤ 1, 0 ≤ x3 ≤ 1, 0 ≤ x4 ≤ 0.1, 0 ≤ x5 ≤ 0.1, 0 ≤ x6 ≤ 0.4, and M1 includes at least one of Mn, Al, Cu, Mg, Zn, Ni, Ti, V, Zr, Co, Ga, Sn, Sb, Nb, and Ge.

It should to be noted that according to the positive electrode plate, the battery and the electrical apparatus, lithium ions will be consumed in the processes of formation, cycling and the like of the battery, which may result in that the measured content of the lithium element in the positive electrode active material is less than 1. Moreover, if the positive electrode plate and the negative electrode plate are subjected to lithium supplementation, the measured content of the lithium element in the positive electrode active material may be more than 1 after the battery is subjected to the processes of formation, cycling and the like.

Similarly, according to the positive electrode plate, the battery and the electrical apparatus, after the battery is subjected to processes such as formation and cycling, elements phosphorus and oxygen will be consumed, which may result in that, in the positive electrode active material, the measured content of the element phosphorus is less than 1 and the measured content of the element oxygen is less than 4.

For example, the lithium transition metal phosphate includes, but is not limited to, Li₁Fe_{0.5}Mn_{0.5}Mg_{0.1}PO₄, Li_{0.5}Fe_{0.8}Mn_{0.5}Mg_{0.1}PO₄, L₁Fe_{0.6}Mn_{0.6}Al_{0.05}PO₄, etc.

In some embodiments, the lithium transition metal oxide includes Li_{1+y1}Ni_{y2}Co_{y3}Mn_{y4}M2_{y5}O_{2-y6}, where -0.8 ≤ y1 ≤ 0.2, 0.5 ≤ y2 ≤ 1, 0 ≤ y3 ≤ 0.5, 0 ≤ y4 ≤ 1, 0 ≤ y5 ≤ 1, 0 ≤ y6 ≤ 0.4, and M2 includes at least one of Fe, Al, Cu, Mg, Zn, Ti, V, Zr, Ga, Sn, Sb, Nb, Ge, Zr, B, and W.

It should to be noted that according to the positive electrode plate, the battery and the electrical apparatus, lithium ions will be consumed in the processes of formation, cycling and the like of the battery, which may result in that the measured content of the lithium element in the positive electrode active material is less than 1. Moreover, if the positive electrode plate and the negative electrode plate are subjected to lithium supplementation, the measured content of the lithium element in the positive electrode active material may be more than 1 after the battery is subjected to the processes of formation, cycling and the like.

Similarly, according to the positive electrode plate, the battery or the electrical apparatus, element oxygen in the positive electrode active material will be consumed in the processes of cycling and the like of the battery, which may result in that the measured content of the element oxygen in the positive electrode active material is less than 2.

For example, the transition metal oxide includes, but is not limited to, Li₁Ni_{0.8}Co_{0.1}Mn_{0.1}O₂, Li_{1.05}Ni_{0.5}Co_{0.4}Mn_{0.1}O_{1.6}, Li₁Ni_{0.7}Co_{0.2}Al_{0.1}O₂, etc.

In some embodiments, the positive electrode current collector 122 may be a metal foil or a composite current collector. For example, an aluminum foil may be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

In some embodiments, as an example, the lithium transition metal phosphate in the first film layer may include an olivine-structured lithium-containing phosphate and a modified product thereof, and the lithium transition metal oxide may include a lithium transition metal oxide and a modified compound thereof. However, the present application is not limited to these materials, and other conventional materials useful as positive electrode active materials for batteries can also be used. Only a single one of or a combination of two or more of these positive electrode active materials can be used. Examples of lithium transition metal oxides can include, but are not limited to, at least one of lithium cobalt oxide (e.g., LiCoO₂), lithium nickel oxide (e.g., LiNiO₂), lithium manganese oxide (e.g., LiMnO₂ and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811)), lithium nickel cobalt aluminum oxide (e.g., LiNi_{0.85}Co_{0.15}Al_{0.05}O₂), modified compounds thereof, etc. Examples of lithium-containing phosphates of olivine structure may comprise, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode plate 121 may be prepared as follows: dispersing the above-mentioned components used to prepare the positive electrode plate, such as the lithium transition metal phosphate, the carbon coating, the binder, and any other components in a solvent (e.g., N-methylpyrrolidone) to form a first film layer slurry; applying the first film layer slurry onto the positive electrode current collector 122; dispersing the lithium transition metal oxide, the conductive agent, the binder, and any other components in a solvent (e.g., N-methylpyrrolidone) to form a second film layer slurry, and applying the second film layer slurry onto the first film layer, followed by processes such as oven drying and cold pressing to obtain the positive electrode plate 121.

### [Negative electrode plate]

The negative electrode plate includes a negative electrode current collector and a negative electrode film layer arranged on at least one surface of the negative electrode current collector, and the negative electrode film layer includes a negative electrode active material.

For example, the negative electrode current collector has two surfaces opposite to each other in a thickness direction of the negative electrode current collector, and the negative electrode film layer is arranged on either or both of the two opposite surfaces of the negative electrode current collector.

In some embodiments, the negative electrode current collector can be a metal foil or a composite current collector. For example, as the metal foil, a copper foil can be used. The composite current collector can comprise a polymer material substrate layer and a metal layer formed on at least one surface of the polymer material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. By way of example, the negative electrode active material can comprise at least one of the following materials: artificial graphite, natural graphite, soft carbon, hard carbon, a silicon-based material, a tin-based material, lithium titanate, etc. The silicon-based material can be selected from at least one of elemental silicon, a silicon-oxygen compound, a silicon-carbon composite, a silicon-nitrogen composite, or a silicon alloy. The tin-based material can be selected from at least one of elemental tin, a tin-oxygen compound, or a tin alloy. However, the present application is not limited to these materials. Other traditional materials that can be used as negative electrode active materials for batteries may also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other components, for preparing the negative electrode plate in a solvent (such as deionized water) to form a negative electrode slurry; and coating the negative electrode slurry on a negative electrode current collector, and performing drying and cold pressing processes to obtain the negative electrode plate.

### [Electrolyte]

The electrolyte plays a role in conducting ions between the positive electrode plate and negative electrode plate. The type of the electrolyte is not specifically limited in the present application and can be selected according to requirements. For example, the electrolyte can be liquid, gelled, or all solid.

In some embodiments, an electrolyte solution is used as the electrolyte. The electrolyte solution contains an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, ethyl methyl sulfone, and ethylsulfonylethane.

In some embodiments, the electrolyte may further optionally include a negative electrode film-forming additive or a positive electrode film-forming additive, or may further include a performance additive that can improve some performances of the battery, such as an additive that improves overcharge performance of the battery or an additive that improves high-temperature or low-temperature performance of the battery.

### [Separator]

In some embodiments, the secondary battery further includes a separator. The type of the separator is not particularly limited in the present application, and any well-known separator with a porous structure having good chemical stability and mechanical stability may be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery may include an outer package. The outer package can be used to encapsulate the above-mentioned electrode assembly and electrolyte solution.

In some embodiments, the outer package of the secondary battery may be a hard case, such as a hard plastic case, an aluminum case, a steel case, and the like. The outer package of the secondary battery may also be a soft pack, such as a pouch. The material of the soft pack may be a plastic, and examples of the plastic may include polypropylene, polybutylene terephthalate, polybutylene succinate, and the like.

The shape of the secondary battery is not particularly limited in the present application, and may be a cylinder, a square, or any other shape. For example, FIG. 2 is a schematic diagram of a secondary battery according to an embodiment of the present application.

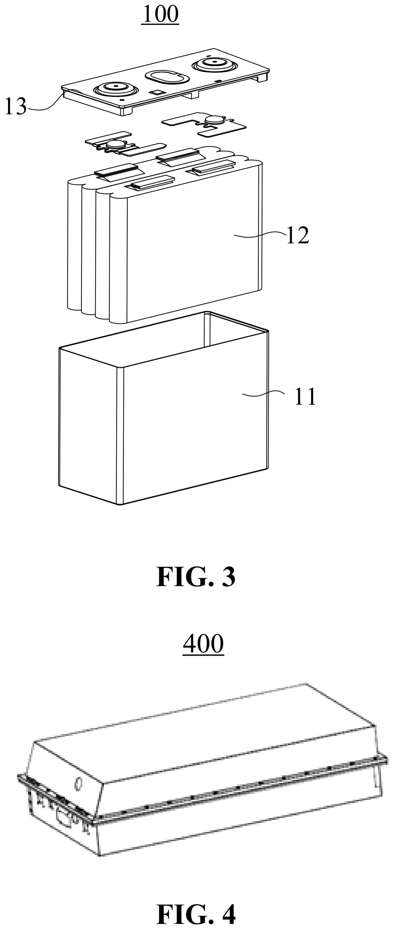

FIG. 3 is a schematic structural diagram of a secondary battery according to an embodiment of the present application. As shown in FIG. 3, the outer package may include a case 11 and a cover plate 13. The case 11 may include a bottom plate and a side plate connected to the bottom plate, where the bottom plate and the side plate enclose to form an accommodating cavity. The case 11 has an opening that communicates with the accommodating cavity, and the cover plate 13 may cover the opening to close the accommodating cavity. The positive electrode plate, the negative electrode plate, and the separator may form the electrode assembly 12 by a winding process or a stacking process. The electrode assembly 12 is encapsulated into the accommodating cavity. An electrolyte solution infiltrates the electrode assembly 12. The number of electrode assemblies 12 contained in the secondary battery 100 can be one or more and can be selected by those skilled in the art according to specific actual requirements.

**In** some embodiments, the secondary batteries 100 may be assembled into a battery module, the number of secondary batteries 100 included in the battery module may be one or more, and the specific number may be selected by those skilled in the art according to the application and capacity of the battery module.

**In** some embodiments, the secondary batteries 100 may be assembled into a battery pack, the number of secondary batteries 100 included in the battery pack may be one or more, and the specific number may be selected by those skilled in the art according to the application and capacity of the battery module.

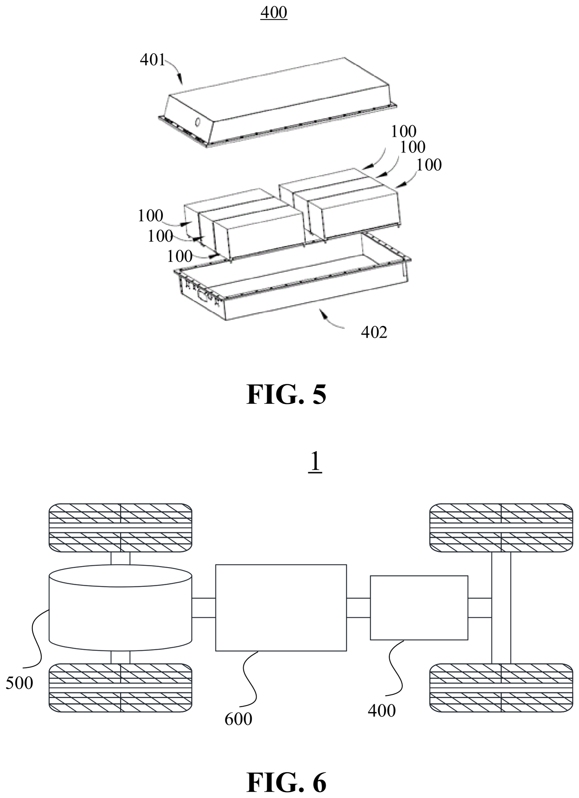

FIG. 4 is a schematic diagram of a battery pack according to an embodiment of the present application, and FIG. 5 is a schematic structural diagram of a battery pack according to an embodiment of the present application. Referring to FIG. 4 and FIG. 5, a battery pack 400 may include a battery box and a plurality of secondary batteries 100 arranged in the battery box. The battery box includes an upper box body 401 and a lower box body 402, and the upper box body 401 can cover the lower box body 402 and form an enclosed space for accommodating the secondary batteries 100. The plurality of secondary batteries 100 may be arranged in the battery box in any manner.

In addition, the present application further provides an electrical apparatus, including at least one of the positive electrode plate, the secondary battery 100, or the battery pack provided in the present application. The positive electrode plate 121, the secondary battery 100, or the battery pack 400 may be used as a power source for the electrical apparatus, and may also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For example, FIG. 6 is a schematic structural diagram of a vehicle according to an embodiment of the present application. As shown in FIG. 6, the vehicle 1 may be a fuel vehicle, a gas vehicle or a new energy vehicle, and the new energy vehicle may be a pure electric vehicle, a hybrid electric vehicle or an extended-range vehicle and the like. A motor 500, a controller 600 and a battery pack 400 may be provided inside the vehicle 1, and the controller 600 is configured to control the battery pack 400 to supply power to the motor 500. For example, the battery pack 400 may be arranged at the bottom or the head or the tail of the vehicle 1. The battery pack 400 may be configured to supply power to the vehicle 1, for example, the battery pack 400 may be used as an operating power source of the vehicle 1, which is used for a circuit system of the vehicle 1, for example, for operation power requirements of the vehicle 1 during starting, navigation and running. In another embodiment of the present application, the battery pack 400 may be used not only as the operating power source of the vehicle 1, but also as the driving power source of the vehicle 1 in place of or partially in place of fuel or natural gas to provide driving power for the vehicle 1.

For the electrical apparatus, the positive electrode plate 121, the secondary battery 100, or the battery pack 400 may be selected according to the usage requirements.

The electrical apparatus is an all-electric vehicle, a hybrid electric vehicle, a plug-in hybrid electric vehicle, or the like. In order to satisfy the requirements of the electrical apparatus for high power and high energy density of the battery, the secondary battery 100 or the battery may be employed.

As another example, the apparatus may be a mobile phone, a tablet, a laptop, etc. The apparatus is generally required to be light and thin, and may use a secondary battery 100 as a power source.

### [Examples]

Examples of the present application will be described below. The Examples described below are illustrative and only used to explain the present application, and cannot be construed as limiting the present application. In Examples in which no specific technologies or conditions are specified, technologies or conditions described in the literature in the art or product specifications are followed. The reagents or instruments used without manufacturer indicated are all commercially available conventional products.

### [Example 1]

### 1). Preparation of lithium ion battery

### 1.1). Preparation of positive electrode

1.11). First film layer slurry: A first positive electrode active material lithium iron phosphate (LiFePO₄), conductive carbon (SP), and a binder polyvinylidene fluoride (PVDF) were dissolved in a solvent N-methylpyrrolidone (NMP) based on a weight ratio of 96%:2%:2%, and were fully stirred and uniformly mixed to obtain a first film layer slurry, where a mass ratio of the first positive electrode active material to the solvent was 1:2.

1.12). Second film layer slurry: A second positive electrode active material lithiumnickel cobalt manganese oxide (LiNi_{0.6}Co_{0.2}Mn_{0.2}O₂), a conductive agent carbon nanotubes (CNT), and a binder polyvinylidene fluoride (PVDF)were dissolved in a solvent N-methylpyrrolidone (NMP) based on a weight ratio of 96%:2%:2%, and were fully stirred and uniformly mixed to obtain a second film layer slurry, where a mass ratio of the second positive electrode active material to the solvent was 1:2, and based on 100 parts by weight of the second film layer slurry, the conductive agent was 1 part by weight; a length-to-diameter ratio of the conductive agent carbon nanotubes was 25.

1.13). Positive electrode plate: The first film layer slurry was uniformly applied on a positive electrode current collector aluminum foil to obtain a first film layer applied on the aluminum foil; the second film layer slurry was uniformly applied on the first film layer to form a second film layer, and followed by drying at 100°C, cold pressing at 40 T, and slitting to obtain a positive electrode plate with the coating order from the positive electrode current collector to the first film layer to the second film layer, where the mass per unit area of the first film layer was 10 mg/cm² and the thickness thereof was 50 µm; the mass per unit area of the second film layer was 10 mg/cm² and the thickness thereof was 25 µm, the mass ratio of the first film layer to the second film layer was 1, and the thickness ratio of the first film layer to the second film layer was 2.

1.2). Preparation of negative electrode: An active material artificial graphite, a conductive agent acetylene black, a binder styrene-butadiene rubber (SBR), and a thickener sodium carboxymethyl cellulose (CMC) were fully stirred and uniformly mixed in an appropriate amount of deionized water solvent system based on a weight ratio of 96.5%:0.7%:1.8%:1% to obtain a negative electrode active material; the negative electrode active material was applied on a copper foil, followed by drying, cold pressing, and slitting to obtain a negative electrode plate.

1.3). Preparation of separator: A PE porous polymer film was used as a separator.

1.4). Electrolyte: EC/EMC/DMC was dissolved in 1M LiPF6 at a volume ratio of 1:1:1 and stirred uniformly.

1.5). Assembly: The positive electrode plate, the separator and the negative electrode plate were stacked in sequence, where the separator was placed between the positive electrode and the negative electrode to play a role of isolation, and then the three were wound to obtain an electrode assembly, followed by adding of the electrolyte. After that, a lithium-ion battery was obtained by hot pressing at 100°C and 250 MPa for 2 min.

### [Example 2]

The preparation process of the lithium-ion battery in Example 2 was basically the same as that in Example 1, except that the conductive agent in the second film layer slurry was 2 parts by weight.

### [Example 3]

The preparation process of the lithium-ion battery in Example 3 was basically the same as that in Example 1, except that the conductive agent in the second film layer slurry was 0.05 parts by weight.

### [Example 4]

The preparation process of the lithium-ion battery in Example 4 was basically the same as that in Example 1, except that the conductive agent in the second film layer slurry was 6 parts by weight.

### [Example 5]

The preparation process of the lithium-ion battery in Example 5 was basically the same as that in Example 1, except that the length-to-diameter ratio of the conductive agent carbon nanotubes in the second film layer slurry was 2.

### [Example 6]

The preparation process of the lithium-ion battery in Example 6 was basically the same as that in Example 1, except that the length-to-diameter ratio of the conductive agent carbon nanotubes in the second film layer slurry was 120.

### [Example 7]

The preparation process of the lithium-ion battery in Example 7 was basically the same as that in Example 1, except that the conductive agent was graphene.

### [Example 8]

The preparation process of the lithium-ion battery in Example 8 was basically the same as that in Example 1, except that the conductive agent was SP.

### [Example 9]

The preparation process of the lithium-ion battery in Example 9 was basically the same as that in Example 1, except that the first positive electrode active material in the first film layer slurry was lithium iron phosphate.

### [Example 10]

The preparation process of the lithium-ion battery in Example 10 was basically the same as that in Example 1, except that the second positive electrode active material in the second film layer slurry was lithium nickel cobalt aluminum oxide.

### [Example 11]

The preparation process of the lithium-ion battery in Example 11 was basically the same as that in Example 10, except that the conductive agent was graphene.

### [Example 12]

The preparation process of the lithium-ion battery in Example 12 was basically the same as that in Example 10, except that the second film layer slurry was applied on the positive electrode current collector, and the first film layer slurry was applied on the second film layer, to obtain the positive electrode plate with a coating order from the positive electrode current collector to the second film layer to the first film layer.

### [Example 13]

The preparation process of the lithium ion battery in Example 13 was basically the same as that in Example 1, except that the mass per unit area of the first film layer was 4 mg/cm²,and the mass ratio of the first film layer to the second film layer was 0.4.

### [Example 14]

The preparation process of the lithium ion battery in Example 14 was basically the same as that in Example 1, except that the thickness of the first film layer was 15 µm, the thickness of the second film layer was 150 µm, and the thickness ratio of the first film layer to the second film layer was 0.1.

### [Example 15]

The preparation process of the lithium-ion battery in Example 15 is basically the same as that in Example 1, except that the mass per unit area of the first film layer was 20 mg/cm², the mass per unit area of the second film layer was 4 mg/cm², and the mass ratio of the first film layer to the second film layer was 5.

### [Example 16]

The preparation process of the lithium ion battery in Example 16 was basically the same as that in Example 1, except that the thickness of the first film layer was 110 µm, the thickness of the second film layer was 10 µm, and the thickness ratio of the first film layer to the second film layer was 11.

### [Example 17]

The preparation process of the lithium ion battery in Example 17 was basically the same as that in Example 1, except that the thickness of the first film layer was 30 µm, and the thickness ratio of the first film layer to the second film layer was 1.

### [Comparative Example 1]

The preparation process of the lithium-ion battery in Comparative Example 1 was basically the same as that in Example 1, except that the conductive agent did not contain the conductive agent.

### 2). Performance characterization of positive electrode plate of lithium-ion battery

2.1). Resistivity measurement: The resistivity of the material was directly measured by means of a resistivity measurement unit, such as BALAB RMS-1000C, through a four-probe method.

2.2). Measurement of compacted density: Refer to GB/T 24533-2009 for details. A certain amount of powder was taken and placed in a special compaction mold, the mold was placed on a compacted density instrument, the powder was weighed to obtain a weight m, with a pressure set to 400 kN. The thickness (thickness after decompression) and volume v of the powder could be read from the device. The compacted density was calculated according to ρ=m/v.

2.3). Measurement of length-to-diameter ratio of carbon nanotubes: Refer to GB/T19077-2016/ISO 13320:2009 for specific details. The testing procedure is as follows: Take an appropriate amount of the sample to be tested (ensure the sample concentration achieves 8-12% shading degree), add 20 ml of deionized water, and perform external ultrasonic treatment for 5 minutes (53 KHz/120 W) to ensure complete dispersion of the sample, and then test the sample in accordance with the GB/T19077-2016/ISO 13320:2009 standard.

2.4). Measurement of coating thickness of carbon coating: Individual particles were cut using focused ion beam (FIB) technology to expose the cross section, and the coating thickness was determined through SEM.

**Table 1 Specific parameters of Examples 1 to 17 and Comparative Example 1**

| Group No. | Lithium transition metal phosphate | Carbon coating | Lithium transition metal oxide | Conductive agent | CNT length-to-diameter ratio | Conductive agent parts by weight | Mass ratio of first film layer to second film layer | Thickness ratio of first film layer to second film layer | Resistivity of first film layer (Ω·cm) | Resistivity of second film layer (Ω·cm) | Resistivity difference between first film layer and second film layer (Ω·cm) |
|---|---|---|---|---|---|---|---|---|---|---|---|
| Example 1 | LiFePO₄ | SP | LiNi_{0.6}Co_{0.2}Mn _{0.2}O₂ | CNT | 25 | 1 | 1 | 2 | 20 | 80 | 60 |
| Example 2 | LiFePO₄ | SP | LiNi_{0.6}Co_{0.2}Mn _{0.2}O₂ | CNT | 25 | 2 | 1 | 2 | 20 | 60 | 40 |
| Example 3 | LiFePO₄ | SP | LiNi_{0.6}Co_{0.2}Mn _{0.2}O₂ | CNT | 25 | 0.05 | 1 | 2 | 20 | 120 | 100 |
| Example 4 | LiFePO₄ | SP | LiNi_{0.6}Co_{0.2}Mn _{0.2}O₂ | CNT | 25 | 6 | 1 | 2 | 20 | 50 | 30 |
| Example 5 | LiFePO₄ | SP | LiNi_{0.6}Co_{0.2}Mn _{0.2}O₂ | CNT | 2 | 1 | 1 | 2 | 20 | 140 | 120 |
| Example 6 | LiFePO₄ | SP | LiNi_{0.6}Co_{0.2}Mn _{0.2}O₂ | CNT | 120 | 1 | 1 | 2 | 20 | 55 | 35 |
| Example 7 | LiFePO₄ | SP | LiNi_{0.6}Co_{0.2}Mn _{0.2}O₂ | Graphene | / | 1 | 1 | 2 | 20 | 90 | 70 |
| Example 8 | LiFePO₄ | SP | LiNi_{0.6}Co_{0.2}Mn _{0.2}O₂ | SP | / | 1 | 1 | 2 | 20 | 200 | 180 |
| Example 9 | LiMn_{0.5}Fe_{0.5} PO₄ | SP | LiNi_{0.6}Co_{0.2}Mn _{0.2}O₂ | CNT | 25 | 1 | 1 | 2 | 20 | 80 | 60 |
| Example 10 | LiFePO₄ | SP | Li(Ni_{0.815}CO_{0.15} Al_{0.035})O₂ | CNT | 25 | 1 | 1 | 2 | 20 | 75 | 55 |
| Example 11 | LiFePO₄ | SP | Li(Ni_{0.815}Co_{0.15} Al_{0.035})O₂ | Graphene | / | 1 | 1 | 2 | 20 | 85 | 65 |
| Example 12 | LiFePO₄ | SP | LiNi_{0.6}Co_{0.2}Mn _{0.2}O₂ | CNT | 25 | 1 | 1 | 2 | 20 | 80 | 60 |
| Example 13 | LiFePO₄ | SP | LiNi_{0.6}Co_{0.2}Mn _{0.2}O₂ | CNT | 25 | 1 | 0.4 | 2 | 30 | 80 | 50 |
| Example 14 | LiFePO₄ | SP | LiNi_{0.6}Co_{0.2}Mn _{0.2}O₂ | CNT | 25 | 1 | 1 | 0.1 | 20 | 100 | 80 |
| Example 15 | LiFePO₄ | SP | LiNi_{0.6}Co_{0.2}Mn _{0.2}O₂ | CNT | 25 | 1 | 5 | 2 | 10 | 80 | 70 |
| Example 16 | LiFePO₄ | SP | LiNi_{0.6}Co_{0.2}Mn _{0.2}O₂ | CNT | 25 | 1 | 1 | 11 | 20 | 65 | 45 |
| Example 17 | LiFePO₄ | SP | LiNi_{0.6}CO_{0.2}Mn _{0.2}O₂ | CNT | 25 | 1 | 1 | 1 | 40 | 80 | 40 |
| Comparative Example 1 | LiFePO₄ | SP | LiNi_{0.6}Co_{0.2}Mn _{0.2}O₂ | / | / | / | 1 | 2 | 20 | 240 | 220 |

### 3). Lithium-ion battery performance characterization

3.1). Internal resistance (DCR) test: Under normal temperature conditions, the lithium-ion battery was subjected to standing for 5 minutes, charged to 4.35 V at a constant current rate of 1 C, and then charged at a constant voltage to a current less than or equal to 0.05 C, to enable the state of charge (SOC) of the lithium-ion battery to be 100%. After standing for 5 min, the battery was discharged at a constant current rate of 1 C to adjust the SOC of the lithium-ion battery to 50%. The lithium-ion battery with 50% SOC was subjected to standing for another 10 min and discharged at a constant current rate of 4C for 30 s. Voltage U₁ during the final 1 s of the standing, voltage U₂ during the final 1 s of constant current discharge at 4C, and current I during constant current discharge at 4C were recorded. DC impedance of the lithium-ion battery in constant current discharge at 4C for 30 s at 25° C, with 50% SOC was R=(U₁-U₂)/I. The test results are as shown in Table 2.

3.2). Capacity retention rate test: The lithium-ion battery was charged to 4.35V at a constant current of 1/3C at 45°C, then charged to a current of 0.05C at a constant voltage of 4.35 V, followed by standing for 5min, and then the battery was discharged to 2.8 V at a constant voltage of 1/3C, to obtain a capacity recorded as an initial capacity C₀. The above steps were repeated for the same battery, a discharge capacity C₂₀₀ of the battery after the 200th cycle was recorded, and then the battery capacity retention rate after each cycle was P₂₀₀ = C₂₀₀ / C₀ × 100%. The test results are shown in Table 2.

3.3). 2C rate performance test: Under room temperature conditions, the battery was charged to 4.35 V at a constant current of 1/3C, and then charged to a current of 0.05C at a constant voltage of 4.35 V, followed by standing for 5 min; then the battery was discharged to 2.8 V at 0.1C, where the average capacity obtained after 5 cycles was recorded as D₀; then the battery was charged under the same conditions as above, and then discharged at 2C, where the average capacity obtained after 50 cycles was recorded as the initial capacity D₂. The capacity retention rate Q₂ of the battery at 1C rate discharge was calculated according to the following formula: Q₂=(D₂/D₀)×100%. The test results are shown in Table 2.

**Table 2: Performance test results of Examples 1 to 17 and Comparative Examples 1**

| Group No. | Battery internal resistance (mΩ) | Capacity retention rate | 2C rate |
|---|---|---|---|
| Example 1 | 0.50 | 95.3% | 77.5% |
| Example 2 | 0.40 | 96.1% | 79.4% |
| Example 3 | 0.88 | 93.2% | 74.6% |
| Example 4 | 0.33 | 92.5% | 76.6% |
| Example 5 | 0.76 | 92.4% | 73.1% |
| Example 6 | 0.37 | 91.8% | 79.6% |
| Example 7 | 0.58 | 94.5% | 76.7% |
| Example 8 | 1.35 | 91.3% | 71.4% |
| Example 9 | 0.48 | 94.8% | 77.8% |
| Example 10 | 0.47 | 96.2% | 77.3% |
| Example 11 | 0.55 | 94.5% | 76.5% |
| Example 12 | 0.52 | 97.4% | 72.2% |
| Example 13 | 0.58 | 92.2% | 76.2% |
| Example 14 | 0.53 | 91.0% | 75.4% |
| Example 15 | 0.41 | 96.7% | 73.3% |
| Example 16 | 0.68 | 93.7% | 76.8% |
| Example 17 | 0.59 | 93.5% | 75.7% |
| Comparative Example 1 | 1.67 | 90.3% | 69.5% |

It can be seem from Examples 1 to 17 and Comparative Example 1 that, since a conductive agent was added to the second film layer containing the lithium transition metal oxide, and the resistivity difference between the first film layer composed of the lithium transition metal phosphate and the carbon coating at least partially covering the surface of the lithium transition metal phosphate was maintained at 10-200 Ω·cm, the internal resistance of the battery can be reduced and the cycling performance and rate performance of the battery can be improved.

Furthermore, it can be seem from Examples 1 to 7, 9 to 17, and Example 8 that, the resistivity difference between the first and second film layers was maintained below 150 Ω·cm, which can further improve the cycling performance and rate performance of the battery.

It can be seem from Examples 1 to 4 that, since the conductive agent was kept in 0.1 and 5 parts by weight, the battery can achieve both good cycling performance and rate performance.

It can be seem from Examples 1, 5, and 6 that, when the conductive agent referred to carbon nanotubes, the length-to-diameter ratio of the carbon nanotubes was maintained at 4 and 100, which enables the battery to achieve both good cycling performance and rate performance.

It can be seem from Examples 1, 13, and 15 that, the mass ratio of the first film layer to the second film layer was maintained at 0.125-10, especially 0.5-5, which is conducive to further improving the cycling performance and rate performance of the battery.

It can be seem from Examples 1, 14, 16, and 17 that, the thickness ratio of the first film layer to the second film layer was maintained within 0.12-20, especially 2-10, which is conducive to further improving the cycling performance and rate performance of the battery.

It can be seem from Examples 1 and 12 that, the second film layer was closer to a metal current collector, i.e., the second film layer was directly applied onto the metal current collector and the first film layer was applied onto the second film layer, which is further conducive to improving the cycling performance of the battery.

It can be seen from Examples 1 to 8, 10 to 17 and Example 9 that the technical solutions of the present application are applicable to a variety of lithium transition metal phosphates at least coated with the carbon coating.

It can be seen from Examples 1 to 9, 12 to 17 and Examples 10 and 11 that the technical solutions of the present application are applicable to the second film layer composed of a variety of lithium transition metal oxides.

It can be seem from Examples 1 to 11 that, a variety of conductive agents are added to the second film layer, which can reduce the internal resistance of the battery to improve the rate performance and cycling performance of the battery.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A positive electrode plate, comprising:
a positive electrode current collector and a positive electrode film layer arranged on at least one side of the positive electrode current collector, wherein the positive electrode film layer comprises a first film layer and a second film layer in a thickness direction of the positive electrode plate;
the first film layer comprises a lithium transition metal phosphate and a carbon coating applied on at least part of the surface of the lithium transition metal phosphate, and the second film layer comprises a lithium transition metal oxide and a conductive agent;
wherein a resistivity difference between the second film layer and the first film layer is 10-200 Ω·cm.

2. The positive electrode plate according to claim 1, wherein
the resistivity difference between the second film layer and the first film layer is 30-150 Ω·cm.

3. The positive electrode plate according to claim 1 or 2, wherein
the first film layer has a resistivity of 20-50 Ω·cm, and optionally, the first film layer has a resistivity of 20-40 Ω·cm; and/or
the second film layer has a resistivity of 100-250 Ω·cm, and optionally, the second film layer has a resistivity of 100-200 Ω·cm.

4. The positive electrode plate according to any one of claims 1 to 3, wherein
based on 100 parts by weight of the second film layer, the content of the conductive agent is 0.1-5 parts by weight, and optionally, the content of the conductive agent is 0.5-3 parts by weight.

5. The positive electrode plate according to any one of claims 1 to 4, wherein
the conductive agent comprises a chain conductive agent and/or a net-like conductive agent, optionally, the chain conductive agent comprises carbon nanotubes and/or carbon nanofibers, and the net-like conductive agent comprises graphene.

6. The positive electrode plate according to claim 5, wherein
the carbon nanotubes have a length-to-diameter ratio of 4-100, and optionally, the carbon nanotubes have a length-to-diameter ratio of 10-50.

7. The positive electrode plate according to any one of claims 1 to 6, wherein
in the first film layer, the carbon coating has a coating thickness of 3-30 µm; and optionally, the carbon coating has a coating thickness of 5-20 µm; and/or
based on 100 parts by weight of the first film layer, the content of the carbon coating is 0.2-5 parts by weight, and optionally, the content of the carbon coating is 0.5-2 parts by weight.

8. The positive electrode plate according to any one of claims 1 to 7, wherein
a mass ratio of the first film layer to the second film layer is 0.125-10, and optionally, the mass ratio of the first film layer to the second film layer is 0.5-5; and/or
the first film layer has a mass per unit area of 3.5-35 mg/cm², and optionally, the first film layer has a mass per unit area of 10-25 mg/cm²; and/or,
the second film layer has a mass per unit area of 3.5-30 mg/cm², and optionally, the second film layer has a mass per unit area of 5-25 mg/cm².

9. The positive electrode plate according to any one of claims 1 to 8, wherein
a thickness ratio of the first film layer to the second film layer is 0.12-20, and optionally, the thickness ratio of the first film layer to the second film layer is 2-10; and/or,
the first film layer has a thickness of 12-180 µm, and optionally, the first film layer has a thickness of 30-140 µm; and/or,
the second film layer has a thickness of 9-180 µm, and optionally, the second film layer has a thickness of 20-100 µm.

10. The positive electrode plate according to any one of claims 1 to 9, wherein
the positive electrode plate has a resistivity of 10-100 Ω·cm, and optionally, the positive electrode plate has a resistivity of 15-35 Ω·cm; and/or
the first film layer has a compacted density of 1.5-3 g/cm³, and optionally, the first film layer has a compacted density of 1.8-2.8 g/cm³; and/or,
the second film layer has a compacted density of 2.5-4 g/cm³, and optionally, the second film layer has a compacted density of 2.5-3.6 g/cm³.

11. The positive electrode plate according to any one of claims 1 to 10, wherein the first film layer is farther away from the positive electrode current collector than the second film layer.

12. The positive electrode plate according to any one of claims 1 to 11, wherein the lithium transition metal phosphate comprises Li₁₊ₓ₁Feₓ₂Mnₓ₃M1ₓ₄P₁₋ₓ₅O₄₋ₓ₆, where -0.8 ≤ x1 ≤ 0.2, 0 ≤ x2 ≤ 1, 0 ≤ x3 ≤ 1, 0 ≤ x4 ≤ 0.1, 0 ≤ x5 ≤ 0.1, 0 ≤ x6 ≤ 0.4, and M1 comprises at least one of Mn, Al, Cu, Mg, Zn, Ni, Ti, V, Zr, Co, Ga, Sn, Sb, Nb, and Ge.

13. The positive electrode plate according to any one of claims 1 to 12, wherein the lithium transition metal oxide comprises Li_{1+y1}Ni_{y2}Co_{y3}Mn_{y4}M2_{y5}O_{2-y6}, where -0.8 ≤ y1 ≤ 0.2, 0.5 ≤ y2 ≤ 1, 0 ≤ y3 ≤ 0.5, 0 ≤ y4 ≤ 1, 0 ≤ y5 ≤ 1, 0 ≤ y6 ≤ 0.4, and M2 comprises at least one of Fe, Al, Cu, Mg, Zn, Ti, V, Zr, Ga, Sn, Sb, Nb, Ge, Zr, B, and W.

14. A secondary battery, comprising the positive electrode plate according to any one of claims 1 to 13.

15. An electrical apparatus, comprising the secondary battery according to claim 14.
